# EUROPÄISCHE PATENTSCHRIFT

(11) **EP 2 939 745 B1**
(45) Veröffentlichungstag und Bekanntmachung des Hinweises auf die Patenterteilung: **10.07.2019**
(21) Anmeldenummer: 14166835.0
(22) Anmeldetag: 02.05.2014
(51) Int. Cl.: B02C 13/14, B02C 13/286, B02C 13/282, B02C 18/08, B02C 18/16, B02C 23/00, B02C 23/02, B02C 7/08, B23P 6/00

(54) **Vorrichtung mit Prallraum**
Device with impact zone
Dispositif doté de chambre à impact

(43) Veröffentlichungstag der Anmeldung: 04.11.2015
(73) Patentinhaber: Lindner, Manuel, 9800 Spittal/Drau (AT)
(72) Erfinder: Lindner, Manuel, 9800 Spittal/Drau (AT); Schiffer, Peter, 9872 Millstatt (AT); Fritz, Mario, 9872 Millstatt (AT); Maier, Michael, 9772 Dellach (AT)
(74) Vertreter: Grünecker Patent- und Rechtsanwälte PartG mbB

(56) Entgegenhaltungen:
- WO-A1-2004/024331
- US-A1- 2008 277 515

## Beschreibung

### Gebiet der Erfindung

Die vorliegende Erfindung betrifft eine Zerkleinerungsvorrichtung bzw. Aufbereitungsvorrichtung zur Zerkleinerung bzw. Aufbereitung von Material insbesondere in Form von Abfallprodukten und insbesondere eine solche Vorrichtung mit einer Prallkammer.

### Stand der Technik

Als Zerkleinerungs- und Aufbereitungsmaschinen für Abfall (Gewerbemüll, Industrieabfall, Elekronikschrott, Metallschrott, Kunststoff, Verbundstoffe, Gummi, Holz u.v.m.) und Substrate (nachwachsende Rohstoffe, Biomasse, u.v.m) werden häufig Maschinen mit vertikalen Wellen (Rotorwellen) und darauf befestigten Werkzeugen eingesetzt. Die Werkzeuge können beispielsweise beweglich angeordnete Prallplatten und Schlegel oder auch Ketten umfassen. Sie werden beispielsweise durch Radlader, Gabelstapler oder Förderbänder oder Förderschnecken über einen Trichter zur Materialaufgabe beschickt. Nach der Zerkleinerung wird das Material ausgetragen und mithilfe eines Transportbandes, einer Transportschnecke, eines Kettenförderers oder einer Absauganlage usw. weiterbefördert.

Die Maschinen weisen Maschinengehäuse mit aufgebautem Antrieb und mit einer Lagerung der Rotorwelle auf. Die Rotorwelle wird von einer runden oder annähernd runden (zylinder- bzw. vieleckförmigen) Prallkammer mit vertikaler Achsrichtung umschlossen, in welchem der Zerkleinerungsvorgang stattfindet. Die Prallkammer ist starr mit dem Maschinengehäuse verbunden und weist eine Einwurf- und eine Auswurföffnung (Austragsöffnung) in fest vorgegebenen Positionen auf. Die Beschickung erfolgt über einen festverschraubten Einwurfschacht, über den das zu verarbeitenden Material durch die Einwurföffnung in die Prallkammer gelangt. Hierdurch kann die Zulieferung des zu zerkleinernden Materials in die Prallkammer und insbesondere der Austrag des zerkleinerten Materials in eine Sammel- oder Transporteinrichtung nur sehr starr positionsgebunden gemäß der vorgegebenen festen Maschinenkonstruktion erfolgen.

Eine derartige Zerkleinerungsvorrichtung ist aus der US2008277515 bekannt. Diese Druckschrift offenbart Hammermühle umfassend ein Gehäuse, welches einen Prallraum definiert, eine Austragsöffnung und eine Rotorwelle in dem Gehäuse umfasst, wobei das Gehäuse um die gleiche Achse wie der Rotor von einer Betriebsposition in eine Wartungsposition drehbar ist, in welcher kein Betrieb der Mühle möglich ist. In der WO 2004/024331 wird eine Zerkleinerungsvorrichtung mit einem Zerkleinerungsraum mit einer Umfangswandung und einer Bodenwandung sowie einer orthogonal zur Bodenwandung verlaufenden Antriebswelle beschrieben.

Es ist somit angesichts der genannten Probleme eine Aufgabe der vorliegenden Erfindung, eine verbesserte Zerkleinerungs- bzw. Aufbereitungsvorrichtung bereitzustellen, in der der Austrag des zerkleinerten Materials im Vergleich zum bekannten Stand der Technik flexibler ermöglicht wird.

### Beschreibung

Die obige Aufgabe wird gelöst durch eine Vorrichtung gemäß Anspruch 1, also eine Vorrichtung zum Zerkleinern bzw. Aufbereiten von Material oder auch Trennen von Materialverbunden, die eine Prallkammer (eine Prallkammer) Austragsöffnung (Auswurföffnung) umfasst. Die Austragsöffnung kann sich in einer Wand der Prallkammer, der beispielsweise eine zylindrische Form aufweist, befinden. Gemäß einem weiteren Beispiel kann sich die Austragsöffnung (azentrisch) im Boden der Prallkammer befinden. In der Prallkammer erstreckt sich eine Rotorwelle mit einer Längsache. Die Längsachse steht beispielsweise im Wesentlichen senkrecht zu einer Fläche, auf der die Vorrichtung (Vertikalzerkleinerer) steht. Die Prallkammer ist um die Längsachse der Rotorwelle drehbar. An der Rotorwelle kann ein Träger mit Zerkleinerungswerkzeugen, insbesondere Prallplatten und ggf. oberhalb davon Schlegelwerkzeugen zur groben Vorzerkleinerung, angebracht sein. Wenn hier und im Weiteren von Zerkleinerung, Zerkleinerungsvorrichtung, Zerkleinerungswerkzeuge etc. die Rede ist, so ist mit diesen Begriffen immer auch das Aufbereiten organischer Materialien (Biomasse) für eine weitere Verarbeitung, also insbesondere das Vergrößern der Oberfläche des in der Vorrichtung verarbeiteten Materials für eine bessere Gasbilanz in einer Biogasanlage, in der das Material nachfolgend verwendet wird, und auch das Trennen von Materialverbunden (beispielsweise Kunststoff und Metall oder verschiedene Metalle) umfasst.

Bei der Vorrichtung kann es sich um einen Prallzerkleinerer/Prallbrecher handeln, der insbesondere zur Zerkleinerung inorganischer oder organischer Abfallprodukte ausgebildet ist. Bei dem zu zerkleinernden Material kann es sich insbesondere um Abfall (Gewerbemüll, Industrieabfall, Elekronikschrott, Metallschrott, Kunststoff, Verbundstoffe, Gummi, Holz) handeln. Es kann sich insbesondere um nachwachsende Rohstoffe, Energiepflanzen, Mais- und Grassilage, Rüben und Knollenfrüchte, Grünschnitt und Futterreste, Stroh und Laub, Landschaftspflegematerial, Mist aus der Viehhaltung, überlagerte Lebensmittel, Schlachthausabfälle, Gülle und Hühnerkot handeln. Die Vorrichtung kann ein Gewicht von mehreren Tonnen, beispielsweise mehr als 1 Tonne, insbesondere mehr als 3 Tonnen, und Abmessungen von mehr als einem Meter oder von mehreren Metern in Länge, Breite und Höhe aufweisen. Die Vorrichtung kann kontinuierlich oder im Chargenbetrieb (Batchbetrieb) betrieben werden.

Dadurch dass die Prallkammer drehbar ist, kann die Position der Austragsöffnung im Gegensatz zum Stand der Technik variiert werden. So kann ein erstes Material zerkleinert und an einer ersten Auswurfposition durch die Austragsöffnung an eine erste Sammeleinrichtung oder Transporteinrichtung übergeben werden, und nachfolgend kann ein zweites Material, das von dem ersten verschieden ist, zerkleinert und an einer zweiten Auswurfposition, die von der ersten verschieden ist, durch die Austragsöffnung an eine von der ersten verschiedene zweite Sammeleinrichtung oder Transporteinrichtung übergeben werden. Hierdurch wird die Flexibilität der Verarbeitung verschiedener Materialien gegenüber dem Stand der Technik in wünschenswerter Weise erhöht.

Durch den im Verlauf des Betriebs der Maschine entstehenden Verschleiß sind Wartungstätigkeiten innerhalb der Maschine (Prallkammer) durchzuführen. Aufgrund der starren Maschinenkonstruktionen und direkten Anschlüsse an den Übergabestellen zur Aufnahme des zu verarbeitenden Materials und Ausgabe des verarbeiteten Materials ist der Wartungszugang im Stand der Technik nur sehr schwer und ergonomisch ungünstig möglich. In der erfindungsgemäßen Vorrichtung wird durch die drehbare Prallkammer der zusätzliche Vorteil bereitgestellt, dass die Wartung deutlich vereinfacht wird.

Insbesondere kann die Prallkammer eine Wartungstür aufweisen und durch die Drehbarkeit der Prallkammer kann die Position (Drehposition) der Wartungstür geändert werden. Je nach Maßgabe der örtlichen und konstruktiven Bedingungen, die für die aufgebaute Vorrichtung in der Praxis vorliegen, kann durch eine entsprechende Drehung der Prallkammer eine Position der Wartungstür gefunden werden, in der die Wartungstür frei geöffnet werden kann, wodurch ein komfortabler Zugang zur Prallkammer zur Wartung desselben bzw. der darin angebrachten Werkzeuge, etc. ermöglicht wird.

Die genannte Prallkammer kann eine sich parallel zur Längsachse der Rotorwelle bzw. der Prallkammer erstreckende Wand aufweisen, sodass die Wartungstür in dieser Wand vorgesehen ist. Ein Öffnen der Wartungstür bedeutet also in diesem Fall ein Öffnen eines Teils der Wand. Die Prallkammer kann hierbei zylinderförmig oder vieleckig ausgebildet sein. Insbesondere kann in der erfindungsgemäßen Vorrichtung die Prallkammer auf einer Trageinrichtung als Teil eines Maschinengehäuses, und zwar drehbare gegenüber derselben, angebracht sein. Beispielsweise kann die Drehung entlang eines Drehkranzes erfolgen, der an der Trageinrichtung angebracht ist und auf der die Prallkammer gelagert ist.

Gemäß einer Weiterbildung umfasst die Wartungstür eine Austragsöffnung zur Ausgabe des in der Prallkammer zerkleinerten Materials. Bei der Austragsöffnung kann es sich um die oben genannte Austragsöffnung der Prallkammer handeln. Zudem kann die Vorrichtung allgemein eine Austragsschiebeeinrichtung, die zum teilweisen oder vollständigen Verschließen der Austragsöffnung ausgebildet ist, aufweisen. Durch teilweises Verschließen der Austragsöffnung kann beispielsweise die Größe des zerkleinerten ausgetragenen Materials im kontinuierlichen Betrieb der Vorrichtung eingestellt werden. In der Austragsöffnung oder dessen Bereich kann auch ein Sieb mit unterschiedlichen Lochungen platziert sein, um die Größe des ausgetragenen Materials zu klassifizieren. Im Chargenbetrieb ist die Austragsöffnung durch die Austragsschiebeeinrichtung bis zum Beenden des Zerkleinerungsvorgangs geschlossen und wird danach zum Austragen des zerkleinerten Materials geöffnet.

Dadurch, dass sie drehbar vorgesehen ist, kann also die Prallkammer in sämtlichen oben beschriebenen Beispielen von einer Betriebsposition, in der das Material zerkleinert werden kann, in eine Wartungsposition, in der beispielsweise die Prallkammer nach Öffnen einer darin vorgesehenen Wartungstür zugänglich ist, gedreht werden. Erfindungsgemäß kann die Prallkammer von einer ersten Betriebsposition, in der das Material zerkleinert werden kann, in eine zweite Betriebsposition, die von der ersten Betriebsposition verschieden ist und in der das Material oder ein anderes Material zerkleinert werden kann, gedreht werden. Das jeweils zerkleinerte Material kann dann durch die Austragsöffnung an den verschiedenen Betriebspositionen an entsprechende unterschiedliche und gegebenenfalls ortsfeste Sammel- oder Transporteinrichtungen ausgegeben werden. So kann ein bestimmtes Material zerkleinert und an einer bestimmten Drehposition der Prallkammer und damit der Austragsöffnung ausgegeben werden. Hernach kann ein weiteres Material zerkleinert und an einer anderen Drehposition der Prallkammer und damit der Austragsöffnung ausgegeben werden. Somit wird die Flexibilität der aufeinanderfolgenden Zerkleinerung verschiedener Materialien gegenüber dem Stand der Technik mit in der Maschinenkonstruktion fest verbauter Prallkammer erheblich erhöht.

In sämtlichen oben beschriebenen Beispielen kann die Prallkammer eine Einwurföffnung (Eintrittsöffnung) zum Einführen des zu zerkleinernden Materials aufweisen, wobei diese Einwurföffnung in einer Ebene parallel zu der Längsachse der Rotorwelle (also seitlich) angeordnet sein kann. Sie kann auch in einer Ebene mit einem gewissen endlichen (ungleich Null) Winkel zur Ebene parallel zur Längsachse (beispielsweise senkrecht dazu) angeordnet sein. Insbesondere kann die Einwurföffnung azentrisch gegenüber der genannten Längsachse der Rotorwelle angeordnet sein, d.h. der Mittelpunkt der Einwurföffnung kann gegenüber der Längsachse einen räumlichen Versatz in einer Ebene senkrecht zu der Längsachse aufweisen. Hierdurch wird ermöglicht, dass bei einer Drehung der Prallkammer die Einwurföffnung von einer ersten Position zur Materialaufnahme zu einer zweiten Position zu weiteren Materialaufnahme gedreht werden können. Es können somit nicht nur, wie oben beschrieben, verschiedene Ströme zerkleinerten Materials an verschiedenen Betriebspositionen ausgegeben werden, sondern es können auch an verschiedenen Betriebspositionen verschiedene Ströme zu zerkleinernden Materials in der Prallkammer aufgenommen werden. So können durch die erfindungsgemäße Vorrichtung Ströme verschiedenen Materials vollständig getrennt voneinander flexibel verarbeitet werden.

Weiterhin wird die Verwendung der Vorrichtung gemäß einem der vorhergehenden Ansprüche zum Aufbereiten eines Substrats beispielsweise für Biogasanlagen bzw. ein Verfahren zum Aufbereiten eines solchen Substrats mithilfe dieser Vorrichtung bereitgestellt, wobei das Verwenden (Verfahren) umfasst:
Einführen eines ersten Materials in den Prallkammer;
Zerkleinern des ersten Materials in der Prallkammer;
Austragen des zerkleinerten ersten Materials in einer ersten Betriebsposition (in der auch beispielsweise das erste Material zerkleinert wird);
Drehen der Prallkammer in eine zweite Betriebsposition, die von der ersten Betriebsposition verschieden ist;
Einführen eines zweiten Materials in die Prallkammer nach dem Austragen des zerkleinerten ersten Materials, wobei das Einführen beispielsweise in der ersten oder in der zweiten Betriebsposition erfolgen kann;
Zerkleinern des zweiten Materials in der Prallkammer beispielsweise in der zweiten Betriebsposition; und
Austragen des zerkleinerten zweiten Materials in der zweiten Betriebsposition.

Das erste Material kann hierbei durch eine Eintrittsöffnung der Prallkammer in der ersten Betriebsposition in die Prallkammer eingeführt werden, und das zweite Material kann durch die Eintrittsöffnung in der zweiten Betriebsposition in die Prallkammer eingeführt werden, wobei die Eintrittsöffnung in einer Ebene senkrecht zu der Längsachse einer Rotorwelle angeordnet sein kann, die sich in der Prallkammer senkrecht erstreckt und azentrisch gegenüber der genannten Längsachse der Rotorwelle angeordnet ist (d.h. der Mittelpunkt der Eintrittsöffnung weist gegenüber der Längsachse einen räumlichen Versatz in der Ebene senkrecht zu der Längsachse auf). So kann ein erstes zu zerkleinerndes Material in einer erste Betriebsposition zugeführt, zerkleinert und ausgegeben werden und ein davon verschiedenes zweites zu zerkleinerndes Material in der zweiten Betriebsposition (also mit gegenüber der ersten Betriebsposition versetzter Eintrittsöffnung) zugeführt, zerkleinert und ausgegeben werden, so dass zwei unterschiedliche Materialströme getrennt nacheinander verarbeitet werden können.

Weitere Merkmale und beispielhafte Ausführungsformen der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figuren 1a und 1b veranschaulichen eine Vorrichtung mit einer drehbaren Prallkammer mit einer Wartungstür gemäß einem Beispiel der vorliegenden Erfindung in einer Querschnittansicht und einer Draufsicht.
Figur 2 zeigt eine Draufsicht eines Beispiels der erfindungsgemäßen Vorrichtung mit drehbarer Prallkammer und verschiedene Drehpositionen der Vorrichtung.

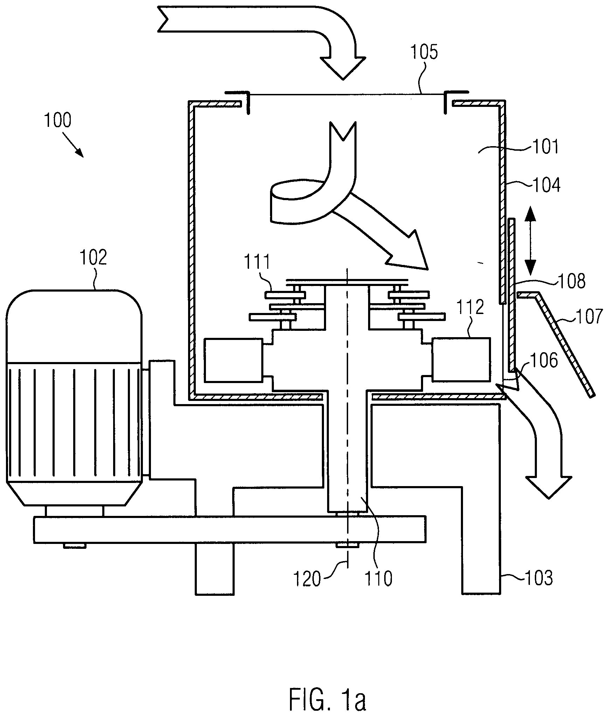

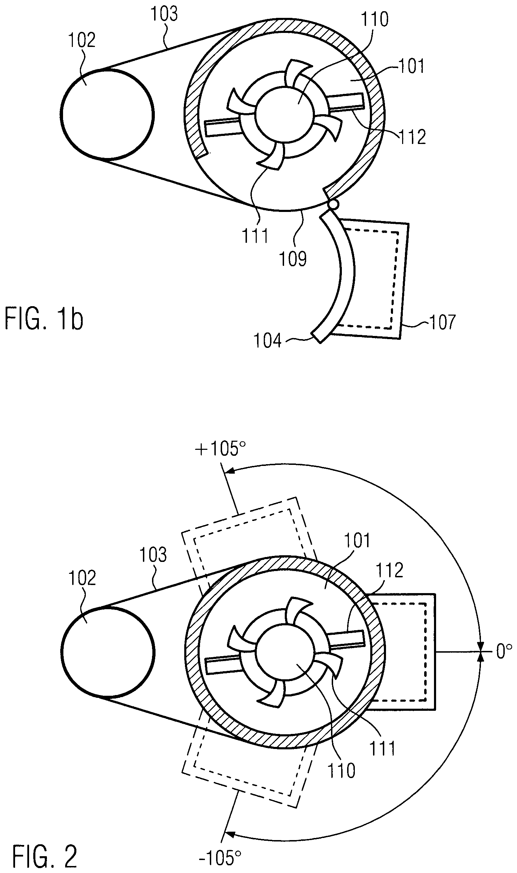

Wie in den Figuren 1a und 1b gezeigt umfasst eine beispielhafte erfindungsgemäße Vorrichtung 100 eine um ihre Längsachse drehbare Prallkammer 101 (eine drehbare Prallkammer 101). In der Prallkammer 1 erstreckt sich eine Rotorwelle 110, mithilfe derer Werkzeuge 111, 112 zum Zerkleinern von in die Prallkammer eingeführten Materials bewegt werden. Es können Prallwerkzeuge auf einem vertikal gelagerten Multielementeträger vorgesehen sein, wobei die Prallwerkzeuge zweireihig angeordnete Multitools 111, Schlegel, für ein grobes Vorbrechen und drehend gelagerte Prallplatten 12 umfassen können.

Die Prallkammer 101 ist um die Längsachse 120 der Rotorwelle 110 drehbar. Die Rotorwelle 110 wird durch einen Antrieb (Motor) 102 angetrieben. Die Prallkammer 101 kann von Hand oder mithilfe eines zusätzlichen Motors auf einem Drehkranz gedreht werden. In dem in den Figuren 1a und 1b gezeigten Beispiel ist der Drehkranz und somit die darauf gelagerte Prallkammer 101 auf einer Trageinrichtung 103 als Teil eines Maschinengehäuses angebracht. Die Prallkammer 101 kann somit relativ zu der Trageinrichtung 103 und somit relativ zu dem Maschinengehäuse gedreht werden.

Insbesondere kann es sich bei der gezeigten Vorrichtung 100 um einen Prallbrecher handeln, der beispielsweise zur Zerkleinerung/Aufbereitung organischer Abfallmaterialien verwendbar ist. Beispielsweise kann der Prallbrecher zum Aufbereiten von organischen Abfallmaterialien für Biogasanlagen eingesetzt werden. Bei den organischen Abfallmaterialien kann es sich um nachwachsende Rohstoffe, Energiepflanzen, Mais- und Grassilage, Rüben und Knollenfrüchte, Grünschnitt und Futterreste, Stroh und Laub, Landschaftspflegematerial, Mist aus der Viehhaltung, überlagerte Lebensmittel, Schlachthausabfälle, Gülle und Hühnerkot handeln. Der Prallbrecher kann ein Gewicht von etwa 6 Tonnen und Maße von etwa 2,5 m in Breite, Länge und Höhe aufweisen. Durchmesser und Höhe der beispielsweise zylindrischen Prallkammer 101 können etwa 1 Meter betragen. Die Antriebsleistung des Motors 102 kann bei etwa 80 kW liegen und für eine Drehzahl der Rotorwelle von etwa 1000 Umdrehungen pro Minute sorgen. Es kann eine Steuerungseinrichtung zur Veränderung der Drehzahl beispielsweise in Abhängigkeit von der Zusammensetzung des zu zerkleinernden Materials vorgesehen sein. Die so konfektionierte Vorrichtung 100 erlaubt eine Durchsatzleistung von etwa 1 bis 8 Tonnen und mehr zu zerkleinernden Materials pro Stunde.

Die Prallkammer 101 weist eine Wartungstür 104 auf. In der in Figur 1a gezeigten Drehposition befindet sich die Wartungstür 104 dem Motor 102 gegenüber. In Figur 1b ist die Wartungstür 104 im geöffneten Zustand gezeigt. Die in der Figur 1a gezeigte Position kann eine Betriebsposition sein, in der ein Zerkleinerungsvorgang stattfindet. In der Betriebsposition kann neben der Zerkleinerung von Material auch das Aufnehmen von zu zerkleinerndem Material und das Austragen von zerkleinertem Material erfolgen. Materialströme sind in Figur 1a durch Pfeile veranschaulicht. Die in Figur 1b gezeigte Position kann eine Wartungsposition sein, in der die Prallkammer 101 durch die geöffnete Wartungstür 104 für eine Wartungsperson durch eine von der geöffneten Wartungstür 104 freigegebene Wartungsöffnung 109 zugänglich ist.

Die Prallkammer 101 weist oben eine Einwurföffnung (Eintrittsöffnung) 105 auf, in die über einen nicht gezeigten Einwurftrichter das in der Vorrichtung 100 zu zerkleinernde Material eingefüllt werden kann. Ein solcher Einwurftrichter kann an der Einwurföffnung 105 angesetzt werden. In dem in den Figuren 1a und 1b gezeigten Beispiel weist die Wartungstür 104 eine Austragsöffnung 106 zur Ausgabe des in der Prallkammer zerkleinerten Materials auf. Die Austragsöffnung 106 geht in ein Ausgangstrichterelement 107 über. Sie kann mithilfe eines Austragsschiebers 108 vollständig oder teilweise geschlossen werden. Der Austragsschieber 108 ist mithilfe eines Spindelhubgetriebes oder hydraulisch betätigten Zylinders stufenlos einstellbar. In der Austragsöffnung 106 oder dessen Bereich kann auch ein Sieb mit unterschiedlichen Lochungen platziert sein, um die Größe des ausgetragenen Materials zu klassifizieren.

Während in den Figuren 1a und 1b die Austragsöffnung 106 in der Wartungstür 104 vorgesehen ist, so kann sie alternativ in der Wand der Prallkammer 101 außerhalb der Wartungstür 104 oder im Boden seitlich von der Rotorwelle 110 vorgesehen sein. Auch kann die Prallkammer in einer Ausführungsform keine Wartungstür aufweisen und die Austragsöffnung 106 in der Wand oder im Boden der Prallkammer vorgesehen sein.

Im Chargenbetrieb (Batchbetrieb) ist der Austragsschieber 108 während des Zerkleinerungsvorgangs vollständig geschlossen, und es wird der Austragsschieber 108 (bzw. die Austragsöffnung 106) zur Ausgabe des zerkleinerten Materials vollständig geöffnet. Im kontinuierlichen Betrieb ist der Austragsschieber 108 nach Maßgabe der gewünschten Größe des zerkleinerten Materials während des Zerkleinerungsvorgangs teilweise geöffnet. Über das Ausgangstrichterelement 107 wird das zerkleinerte Material einer Sammel- oder Abtransporteinrichtung zugeführt.

Wie es in Figur 2 gezeigt ist, können beispielsweise drei Drehpositionen der Prallkammer 101 unterschieden werden. In einer Position a ist die Austragsöffnung 106 bzw. das Ausgangstrichterelement 107 dem Motor 102 gegenüber positioniert. Es kann also eine Gerade mittig durch den Motor und mittig durch das Ausgangstrichterelement 107 gelegt werden. Diese Position a kann eine erste Betriebsposition sein, in der ein erstes Material in die Prallkammer eingeführt und dort zerkleinert wird. Nach der Zerkleinerung wird es beispielsweise in derselben Position a durch das Ausgangstrichterelement 107 ausgegeben.

Nach Ausgabe des zerkleinerten Materials an Position a und Schließen der Austragsöffnung durch den Austragsschieber 108 (siehe Figur 1a), kann an derselben Position a ein zweites Material in die Prallkammer 101 eingeführt und dort zerkleinert werden. Nach Zerkleinerung des zweiten Materials kann es nach Drehen der Prallkammer 101 in die Position b durch das Ausgangstrichterelement 107 ausgegeben werden. Normalerweise wird jedoch die Prallkammer 101 nach Austragen des zerkleinerten Materials an Position a auf Position b zur Aufnahme des zweiten zu zerkleinernden Materials gedreht werden. In dem gezeigten Beispiel wird die Position b durch Drehen der Prallkammer 101 um seine Längsachse (die Längsachse 120 der Rotorwelle 110, die sich in der Prallkammer 101 erstreckt; siehe Figur 1a) aus der Position a um 105 ° entgegen dem Uhrzeigersinn erreicht. Mit einer abweichenden Ausführung des Antriebes durch den Motor kann die Auswurfposition des zerkleinerten Materials im Bereich von 360° variiert werden.

Die Zerkleinerung des zweiten Materials kann also alternativ an der Position b oder auch an einer anderen Position erfolgen. Auch das Einführen des zu zerkleinernden zweiten Materials kann alternativ an der Position b oder auch an einer anderen Position erfolgen. Das erste Material kann von dem zweiten Material verschieden sein. Es wird somit insbesondere erfindungsgemäß ermöglicht, dass nacheinander unterschiedliches Material in der Prallkammer 101 zerkleinert und nach der Zerkleinerung an unterschiedliche gegebenenfalls ortsfeste Sammel- oder Transporteinrichtungen an unterschiedlichen Drehpositionen der Prallkammer 101 und somit der Austragsöffnung 106 ausgegeben wird.

In einer Ausführungsform wird die in der Figur 1a gezeigte Einwurföffnung 105 azentrisch gegenüber der Längsachse 120 der Rotorwelle 110 (also seitlich von dieser versetzt) vorgesehen. So kann beispielsweise an der Betriebsposition a von einem ersten beispielsweise ortsfesten Förderer (einer ersten Förderschnecke) das erste zu zerkleinernde Material durch die entsprechend zur Materialaufnahme positionierte Einwurföffnung 105 in die Prallkammer 101 geführt werden, während in der Betriebsposition b von einem zweiten beispielsweise ortsfesten Förderer (einer zweiten Förderschnecke) das zweite zu zerkleinernde Material durch die in dieser Position b entsprechend zur Materialaufnahme positionierte Einwurföffnung 105 in die Prallkammer 101 geführt wird. Zusammen mit unterschiedlichen Sammel- oder Abtransporteinrichtungen an den Positionen a und b lassen sich so unterschiedliche Materialströme nacheinander höchst effizient mit ein und derselben Vorrichtung 100 zum Zerkleinern von Materialien verarbeiten.

In Figur 2 ist eine dritte Position c (vergleichbar der in Figur 1b gezeigten Position) gezeigt. Die Position c kann durch Drehen der Prallkammer 101 um seine Längsachse (die Längsachse 120 der Rotorwelle 110, die sich in der Prallkammer 101 erstreckt; siehe Figur 1a) aus der Position a um 105 ° bzw. aus der Position b um 210 ° im Uhrzeigersinn erreicht werden. Beispielsweise ist die Position c, wie in Figur 2 gezeigt, eine dritte Betriebsposition. Durch Drehen der Prallkammer 101 kann also an den gezeigten drei Positionen a, b und c zu zerkleinerndes Material aufgenommen und zerkleinertes Material ausgetragen werden. Alternativ kann Position c eine Wartungsposition sein, in der die Wartungstür der Prallkammer 101 hinderungsfrei geöffnet werden kann (vergleiche Figur 1b), sodass die Prallkammer 101 durch die von der geöffneten Wartungstür freigegebenen Wartungsöffnung 109 in der Position c für eine Wartungsperson leicht zugänglich gemacht werden kann. Somit kann die Wartung gegenüber dem Stand der Technik, in dem die Prallkammer ortsfest in der gesamten Maschinenkonstruktion eingebaut ist, signifikant vereinfacht werden. Insbesondere kann nach Maßgabe eines verfügbaren Aufstellraums oder anderer örtlicher wie konstruktiver Nebenbedingungen die Prallkammer 101 in eine Position c gedreht werden, in der genügend Platz zum weiten Öffnen der Wartungstür 104 bereitgestellt wird. Somit kann eine Wartungsperson einfachen Zugang zu der zu wartenden Prallkammer 101 bzw. den darin befindlichen Werkzeugen 111, 112 etc. gewinnen.

Während in Figur 2 drei Betriebspositionen a, b und c gezeigt sind, versteht es sich, dass prinzipiell eine vom Nutzer wählbare beliebige Anzahl an Betriebs- und Wartungspositionen vorgesehen werden kann. Ebenso kann der Winkelabstand (siehe Figur 2) von einer Position zur nächsten Position prinzipiell frei gewählt werden.

## Patentansprüche

1. Eine Vorrichtung (100) zum Zerkleinern von Material, die eine Prallkammer (101) mit einer Austragsöffnung (106) und einer sich in der Prallkammer (101) erstreckenden Rotorwelle mit einer Längsache umfasst, wobei die Prallkammer (101) um die Längsachse der Rotorwelle von einer ersten Betriebsposition (a), in der das Material zerkleinert werden kann, in eine zweite Betriebsposition (b), die von der ersten Betriebsposition (a) verschieden ist und in der das Material oder ein anderes Material zerkleinert werden kann, drehbar ist.

2. Vorrichtung gemäß Anspruch 1, in der die Prallkammer (101) eine sich parallel zur Längsachse der Rotorwelle erstreckende Wand aufweist und die Austragsöffnung (106) in der Wand vorgesehen ist.

3. Vorrichtung gemäß Anspruch 2, weiterhin mit einer Austragsschiebeeinrichtung (108), die zum teilweisen oder vollständigen Verschließen der Austragsöffnung (106) ausgebildet ist.

4. Vorrichtung gemäß einem der vorhergehenden Ansprüche, in der die Prallkammer (101) auf einer Trageinrichtung (103) drehbar gegenüber derselben angeordnet ist.

5. Vorrichtung gemäß einem der vorhergehenden Ansprüche, wobei die Vorrichtung eine Eintrittsöffnung (105) in einer Ebene parallel zur Längsachse der Rotorwelle oder in einer Ebene, die in einem bestimmten endlichen Winkel zu der Ebene parallel zur Längsachse der Rotorwelle angeordnet ist, umfasst.

6. Vorrichtung gemäß Anspruch 5, in der die Eintrittsöffnung (105) azentrisch bezüglich der Längsachse der Rotorwelle ist.

7. Vorrichtung gemäß einem der vorhergehenden Ansprüche, wobei die Vorrichtung ein Prallzerkleinerer ist, der zur Zerkleinerung von inorganischen oder organischen Abfallmaterialien ausgebildet ist.

8. Vorrichtung gemäß Anspruch 7, in der an der Rotorwelle ein Träger mit Zerkleinerungswerkzeugen angebracht ist.

9. Vorrichtung gemäß einem der vorhergehenden Ansprüche, in der die Prallkammer (101) eine Wartungstür (104) aufweist, die insbesondere die Austragsöffnung (106) zur Ausgabe des im Prallraum (101) zerkleinerten Materials umfasst.

10. Vorrichtung gemäß einem der vorhergehenden Ansprüche, wobei die Prallkammer (101) von einer Betriebsposition (a, b), in der das Material zerkleinert werden kann, in eine Wartungsposition (c), in der insbesondere die Prallkammer (101) nach Öffnen der Wartungstür (104) zugänglich ist, drehbar ist.

11. Verwendung der Vorrichtung gemäß einem der vorhergehenden Ansprüche zum Zerkleinern oder Aufbereiten eines Materials, wobei das Verwenden umfasst:
Einführen eines ersten Materials in die Prallkammer (101);
Zerkleinern des ersten Materials in der Prallkammer (101);
Austragen des zerkleinerten ersten Materials in einer ersten Betriebsposition (a);
Drehen der Prallkammer (101) in eine zweite Betriebsposition (b), die von der ersten Betriebsposition (a) verschieden ist;
Einführen eines zweiten Materials in die Prallkammer (101) nach dem Austragen des zerkleinerten ersten Materials;
Zerkleinern des zweiten Materials in der Prallkammer (101); und
Austragen des zerkleinerten zweiten Materials in der zweiten Betriebsposition (b).

12. Verwendung der Vorrichtung gemäß Anspruch 11, bei der das erste Material durch eine Eintrittsöffnung (105) der Prallkammer (101) in der ersten Betriebsposition (a) in die Prallkammer (101) eingeführt wird, und das zweite Material durch die Eintrittsöffnung (105) in der zweiten Betriebsposition (b) in die Prallkammer (101) eingeführt wird.

## Claims

1. Device (100) for shredding material, comprising a baffle chamber (101) with a discharge opening (106) and a rotor shaft having a longitudinal axis and provided in said baffle chamber (101), where said baffle chamber (101) is rotatable about said longitudinal axis of said rotor shaft from a first operating position (a), in which said material can be shredded, to a second operating position (b), which differs from said first operating position (a) and in which said material or further material can be shredded.

2. Device according to claim 1, in which said baffle chamber (101) comprises a wall extending parallel to said longitudinal axis of said rotor shaft and said discharge opening (106) is provided in said wall.

3. Device according to claim 2, further with a discharge push device (108) which is configured to partially or completely close said discharge opening (106).

4. Device according to one of the preceding claims, in which said baffle chamber (101) is arranged on a support device (103) rotatable relative to the latter.

5. Device according to one of the preceding claims, wherein said device comprises an inlet opening (105) in a plane parallel to said longitudinal axis of said rotor shaft or in a plane which is arranged in a certain finite angle relative to said plane parallel to said longitudinal axis of said rotor shaft.

6. Device according to claim 6, in which said inlet opening (105) is non-central relative to said longitudinal axis of said rotor shaft.

7. Device according to one of the preceding claims, wherein said device is an impact crusher which is configured to shred inorganic or organic waste materials.

8. Device according to claim 7, in which a support with shredding tools is mounted on said rotor shaft.

9. Device according to one of the preceding claims in which said baffle chamber (101) comprises a service door (104), comprising in particular said discharge opening (106) for discharging said material shredded in said baffle chamber (101).

10. Device according to one of the preceding claims, wherein said baffle chamber (101) is rotatable from an operating position (a, b), in which said material can be shredded, to a service position (c), in which in particular said baffle chamber (101) is accessible after opening said service door (104).

11. Use of said device according to one of the preceding claims for shredding or recycling material, the use comprising:
introducing first material into said baffle chamber (101);
shredding said first material in said baffle chamber (101);
discharging said shredded first material in a first operating position (a);
rotating said baffle chamber (101) to a second operating position (b) differing from said first operating position (a);
introducing second material into said baffle chamber (101) after said shredded first material has been discharged;
shredding said second material in said baffle chamber (101); and
discharging said shredded second material in said second operating position (b).

12. Use of said device according to claim 11 in which said first material is in said first operating position (a) introduced through an inlet opening (105) of said baffle chamber (101) into said baffle chamber (101), and said second material is in said second operating position (b) introduced through said inlet opening (105) into said baffle chamber (101).

## Revendications

1. Un dispositif (100) pour broyer un matériau, qui comprend une chambre d'impact (101) avec une ouverture d'évacuation (106) et un arbre de rotor avec un axe longitudinal s'étendant dans la chambre d'impact (101), le dispositif étant tel, que la chambre d'impact (101) puisse être tournée autour de l'axe longitudinal de l'arbre de rotor, d'une première position de fonctionnement (a), dans laquelle le matériau peut être broyé, à une deuxième position de fonctionnement (b), qui est différente de la première position de fonctionnement (a) et dans laquelle le matériau ou bien un autre matériau peut être broyé.

2. Dispositif selon la revendication 1, dans lequel la chambre d'impact (101) présente une paroi s'étendant parallèlement à l'axe longitudinal de l'arbre de rotor, et l'ouverture d'évacuation (106) est prévue dans la paroi.

3. Dispositif selon la revendication 2, comprenant en outre un dispositif de volet coulissant d'évacuation (108), qui est réalisé pour fermer partiellement ou totalement l'ouverture d'évacuation (106).

4. Dispositif selon l'une des revendications précédentes, dans lequel la chambre d'impact (101) est agencée sur un dispositif de support (103), de manière rotative par rapport à celui-ci.

5. Dispositif selon l'une des revendications précédentes, le dispositif comportant une ouverture d'entrée (105) dans un plan parallèle à l'axe longitudinal de l'arbre de rotor ou dans un plan, qui est agencé selon un angle fini déterminé par rapport au plan parallèle à l'axe longitudinal de l'arbre de rotor.

6. Dispositif selon la revendication 5, dans lequel l'ouverture d'entrée (105) est décentrée par rapport à l'axe longitudinal de l'arbre de rotor.

7. Dispositif selon l'une des revendications précédentes, le dispositif étant un broyeur à impact, qui est conçu pour broyer des matériaux de déchets inorganiques ou organiques.

8. Dispositif selon la revendication 7, dans lequel sur l'arbre de rotor est rapporté un support avec des outils de broyage.

9. Dispositif selon l'une des revendications précédentes, dans lequel la chambre d'impact (101) comporte une porte d'entretien (104), qui comprend notamment l'ouverture d'évacuation (106) pour évacuer le matériau broyé dans la chambre d'impact (101).

10. Dispositif selon l'une des revendications précédentes, dans lequel la chambre d'impact (101) peut être tournée d'une position de fonctionnement (a, b), dans laquelle le matériau peut être broyé, à une position d'entretien (c), dans laquelle la chambre d'impact (101) est notamment accessible après ouverture de la porte d'entretien (104).

11. Utilisation du dispositif selon l'une des revendications précédentes, pour broyer ou préparer un matériau, l'utilisation comprenant :
l'introduction d'un premier matériau dans la chambre d'impact (101) ;
le broyage du premier matériau dans la chambre d'impact (101) ;
l'évacuation du premier matériau broyé dans une première position de fonctionnement (a) ;
la rotation de la chambre d'impact (101) dans une deuxième position de fonctionnement (b), qui est différente de la première position de fonctionnement (a) ;
l'introduction d'un deuxième matériau dans la chambre d'impact (101) après l'évacuation du premier matériau broyé ;
le broyage du deuxième matériau dans la chambre d'impact (101) ; et
l'évacuation du deuxième matériau broyé dans la deuxième position de fonctionnement (b).

12. Utilisation du dispositif, selon la revendication 11, d'après laquelle le premier matériau est introduit dans la chambre d'impact (101), dans une première position de fonctionnement (a), à travers une ouverture d'entrée (105) de la chambre d'impact (101), et le deuxième matériau est introduit dans la chambre d'impact (101) dans la deuxième position de fonctionnement (b), à travers l'ouverture d'entrée (105) .
